(19) Europäisches Patentamt
European Patent Office
Office européen des brevets

(11) EP 0 695 780 B2

(12) # NOUVEAU FASCICULE DE BREVET EUROPEEN

(45) Date de publication et mention de la décision concernant l'opposition:
**27.12.2006 Bulletin 2006/52**

(45) Mention de la délivrance du brevet:
**25.10.2000 Bulletin 2000/43**

(21) Numéro de dépôt: **95111392.7**

(22) Date de dépôt: **20.07.1995**

(51) Int Cl.:
***C08K 5/40*** *(2006.01)* ***C08K 5/39*** *(2006.01)*
***C08L 21/00*** *(2006.01)* ***B29D 30/56*** *(2006.01)*

(54) **Composition de caoutchouc dépourvue de précurseur de nitrosamine cancérigène et servant de gomme de liaison**

Gummimischung frei von carcinogenen Nitrosaminvorläufer und geeignet als Verbindungsmaterial

Rubber composition free of carcinogenic nitrosamine precursors and suitable as joining material

(84) Etats contractants désignés:
**BE DE ES FR GB IT SE**

(30) Priorité: **03.08.1994 FR 9409740**

(43) Date de publication de la demande:
**07.02.1996 Bulletin 1996/06**

(73) Titulaire: **COMPAGNIE GENERALE DES ETABLISSEMENTS MICHELIN-MICHELIN & CIE**
**63040 Clermont-Ferrand Cédex (FR)**

(72) Inventeurs:
- **Chauvin, Brigitte**
  **F-63400 Chamalieres (FR)**
- **Mangeret, Jean-Luc**
  **F-63200 Riom (FR)**

(74) Mandataire: **Ribière, Joel**
**Michelin & Cie**
**Service SGD/LG/PI-LAD**
**63040 Clermont-Ferrand Cedex 09 (FR)**

(56) Documents cités:

| | |
|---|---|
| **EP-A- 0 283 552** | **EP-A- 0 545 883** |
| **EP-A- 0 562 750** | **DE-A- 4 004 205** |
| **DE-A- 4 038 946** | **US-A- 3 951 720** |
| **US-A- 5 326 828** | |

- **Th. Kemperman, "Substitution of Accelerators forming Harmful Nitrosamines" ; Bayer AG**
- **W.F. Verhelst et al., "Nitrosamines : from problem to challenge", Meeting of Rubber Division, American Society, Oct. 1993**
- **D.B. Seeberger, "A new safe thiuram, TbzTD", Rubber World, Aug. 1990, pp. 18-21**
- **(a) RO 93933, Derwent Abstract ; AN 1988-343991 / (b) Chemical Abstract ; AN 1989 : 194474**
- **Kautschuk-Lexikon, A.W. Gentner Verlag Stuttgart ; 1977, pp. 230, 175-176**
- **B. Kuriakose et al., "Studies on Secondary Accelerator Systems for Natural Rubber Retread Compounds", Rubber India, nov. 1983, pp. 9-18**
- **A.D.T. Gorton ; "Formulating natural rubber to meet regulatory nitrosamine limits" NR Technology, vol. 18, part 1, 1987, pp. 1-12**
- **F.C. Weissert, "Abstracts of Meeting Papers 125th Meeting of the Rubber Division", American Chemical Society, May 1984, Chapt. 37, pp. 193-194**
- **Ullmann's Encyclopedia of Industrial Chemistry, 5th Ed. 1993, pp. 369-375**
- **"Vulnax, Rubber Chemicals Equivalents", December 1981**
- **T.L. Jablonowski, "TBzTD and CBBS - Alternative accelerators for reducing nitrosamine generation", Rubber World, Aug. 1992, pp. 18-22**
- **L. Bolangier, "EPDM Polymer and compound developments in view of the emerging legislations" ; PRI Conference in Leuven, Belgium ; Apr. 1991**

EP 0 695 780 B2

## Description

L'invention concerne l'utilisation d'une composition comportant au moins un caoutchouc, cette composition étant destinée à servir de gomme de liaison pour la fabrication d'une enveloppe de pneumatique neuve, ou de gomme de réparation pour le rechapage ou la réparation d'une enveloppe de pneumatique usagée

Il existe deux principaux procédés connus de rechapage :

- le premier procédé dit "rechapage moule" ou encore "rechapage à chaud" consiste à poser une bande de roulement neuve, crue et dépourvue de sculpture sur la carcasse usagée préalablement déchapée et brossée, et à cuire l'ensemble de l'enveloppe ainsi constituée dans un moule, sous pression, à des températures de l'ordre de 150°C ; la sculpture de la bande de roulement est imprimée lors de cette opération par l'action du moule chaud sous pression ;

- le deuxième procédé est fondé sur le concept de la "vulcanisation froide", c'est-à-dire une vulcanisation à une température relativement basse, comprise entre 95 et 140°C, et notamment comprise entre 95 et 115°C.

Ce deuxième procédé de vulcanisation froide est décrit par exemple dans les brevets US-A-3 951 720, US-A-2 976 910, US-A-3 136 673, US-A-3 236 709 ou encore dans "Tire Technology International 1993" (The Annual Review of Tire Materials and Tire Manufacturing Technology, UK & International Press, 1993, p. 194).

Dans ce procédé, une couche crue d'une préparation de caoutchouc est intercalée entre l'enveloppe déchapée et la bande de roulement de remplacement précuite, cette couche étant destinée à assurer, après cuisson à basse température, la liaison des matériaux. De telles préparations de caoutchouc sont ainsi communément appelées dans l'art "gommes de liaison". La carcasse et la bande de roulement de remplacement étant déjà vulcanisées, la température de recuisson lors du rechapage doit être la plus basse possible pour ne pas dégrader les performances du pneumatique, comme cité dans la référence "La chaleur raccourcit la vie du pneumatique " (Bandag, Communication Pneu, 1992, p 32).

Dans ce procédé de vulcanisation froide, une bonne adhésion de la gomme de liaison aux mélanges adjacents précuits nécessite un degré de vulcanisation élevé. La cohésion élevée nécessaire à la gomme de liaison est acquise par la réticulation, lors de la cuisson à basse température. Pour ces gommes de liaison, il est donc nécessaire d'utiliser des systèmes de vulcanisation très réactifs à basse température de façon à garantir des vitesses de cuisson rapides et des degrés de réticulation élevés. Ces deux performances du système de vulcanisation sont indispensables pour améliorer la productivité et la qualité de ce type de rechapage.

Cependant, il est également indispensable que ces systèmes de vulcanisation n'entraînent pas de vulcanisation précoce dans les conditions normales de conservation des gommes de liaison aux températures habituelles de stockage ou de transport. Or, les systèmes de vulcanisation très réactifs en cuisson sont souvent peu stables à cru. Une solution connue dans la technique pour concilier les exigences de réactivité et de stabilité de ces systèmes de vulcanisation consiste à maintenir séparés pendant le stockage l'agent de vulcanisation d'une part, et les accélérateurs de vulcanisation d'autre part, et de ne les mettre en contact que lors de l'opération de rechapage. Ainsi, par exemple, le brevet US-A-2 976 910 cite l'utilisation conjointe d'une dissolution contenant soit l'agent de réticulation, soit les accélérateurs de vulcanisation et d'un film qui contient les ingrédients manquants du système de vulcanisation. Il est également possible, comme cité dans la référence US-A-3136 673, de recourir à l'emploi de deux films qui contiennent l'un l'agent de réticulation, et l'autre les accélérateurs de vulcanisation.

D'autre part, de nouvelles contraintes d'ordre toxicologique sont apparues ces dernières années avec des réglementations européennes strictes limitant à des valeurs très basses les taux de certaines nitrosamines dans les aires de stockage et les ateliers de cuisson.

En Allemagne par exemple, il existe une "Règle Technique pour Substances Dangereuses", la TRGS n°552, qui est consacrée spécifiquement aux nitrosamines, et fixe des concentrations limites de ces dernières dans l'air.

La TRGS n° 552 est citée dans plusieurs articles techniques qui font le point sur le pouvoir cancérigène des nitrosamines, et proposent éventuellement des substituts aux produits précurseurs de nirosamines cancérigènes:

- "A new safe thiuram, TBzTD" (D.B. Seeberger, 136th Meeting of the Rubber Division, ACS Paper n° 70 (1989).
- "Les nitrosamines : un défi bien réel" (H.W. Engels, Caoutchoucs & Plastiques n° 715, pages 52 à 57, 1992).
- "Les nitrosamines dans l'industrie du caoutchouc : le point sur la question en République Fédérale d'Allemagne" (P. Lüpfert, Kautschuk Gummi, Kunststoffe, vol 42, n°1, pages 16 à 21, 1989).
- "N-nitrosamines volatiles et atmosphères industrielles" (N.Daubourg, A.Coupard et A.Pepe, Caoutchoucs et Plastiques N° 717,pages 103 à 113, oct. 1992).

Dans l'industrie du pneumatique, les accélérateurs de vulcanisation sont très souvent des précurseurs de nitrosamines; or, il y a principalement douze nitrosamines classées cancérigènes et citées dans la TRGS n°552 (N-Nitrosodi-n-butylamine; N-Nitrosodiéthylamine ; N-Nitrosodi-i-propylamine ; N-Nitrosodiéthanolamine ; N-Nitrosodiméthylamine ; N-Nitrosodi-n-propylamine ; N-Nitrosoéthylphénylamine ; N-Nitrosométhylphénylamine ; N-Nitrosopipéridine ; N-Nitrosométhyléthylamine ; N-nitrosomorpholine ; N-nitrosopyrrolidine), et ces nitrosamines sont pour la plupart susceptibles d'être produites par nitrosation des produits de décomposition des accélérateurs de vulcanisation.

Dans ce contexte d'hygiène industrielle, il est donc important que les systèmes de vulcanisation des compositions de caoutchouc en général et des gommes de liaison en particulier soient dépourvus de précurseurs de nitrosamines cancérigènes et réglementées.

Les compositions de caoutchouc qui sont destinées notamment à être utilisées comme gommes de liaison et qui contiennent des systèmes de vulcanisation complets, c'est-à-dire à la fois les agents de vulcanisation et les accélérateurs de vulcanisation, doivent donc présenter en même temps des cuissons rapides à basse température avec des rendements élevés, une excellente stabilité à cru dans les conditions habituelles de conservation, de stockage et de transport, et être dépourvues de composé ou d'ingrédient précurseur de nitrosamines cancérigènes et réglementées.

Dans la littérature, des systèmes complets de vulcanisation au soufre pour cuisson à basse température sont largement cités.

Il est ainsi connu que des associations composées d'ultra-accélérateurs de la famille des thiurames ou des dithiocarbamates, et de dérivés du benzothiazole, confèrent aux mélanges une réactivité élevée à basse température, comme cité dans :

- "Room Temperature Curative Systems for Natural Rubber" (S.W. SIN, Proceedings of Technology Seminar, 4-5 dec.1978, pages 178 à 186).
- "Vulcanization and Vulcanizing agents" (W. Hofmann, Palmerton Publishing, New York, 1967, page 139).
- Encyclopedia of Chemical Technology, 3rd edition (Vol. 20, Edition John Wiley & Sons, Inc. 1982, pages 350 à 352).

Par ailleurs, il est également connu que de telles associations peuvent permettre d'atteindre des rendements de vulcanisation élevés comme cité par T.D. Skinner et A.A. Watson (Rubber Age 99 (11), p.76, 1967).

Néanmoins, la grande réactivité de ces produits, lors de la cuisson des compositions qui les contiennent, engendre le plus souvent une tendance marquée à la prévulcanisation et au grillage à des températures modérées qui peuvent correspondre aux températures de conservation ou de stockage de ces compositions, comme cité dans "Prevulcanization inhibitor of sulfur-free thiuram vulcanization" (V. Duchacek, Rubber Chem.& Technol., 46, pages 504 à 510, 1973).

De plus, beaucoup de thiurames et de dithiocarbamates qui permettent de réaliser les cuissons à basse température sont des précurseurs de nitrosamines cancérigènes selon la législation européenne, comme par exemple le "méthyl zimate" (diméthyldithiocarbamate de zinc) cité dans US-A-3 951 720, ce produit étant un précurseur de la diméthylnitrosamine qui est classée cancérigène dans la réglementation TRGS 552.

D'autre part, des systèmes complets de vulcanisation conférant aux compositions crues de caoutchouc une bonne sécurité au grillage et une excellente stabilité à cru sont également connus. Des exemples de tels systèmes sont cités dans :

- Encyclopedia of Chemical Technology (3rd edition, vol. 20, Editeur John Wiley & Sons, Inc., 1982 pages 390 à 392).
- "OTOS/MBT Derivative Vulcanization Systems" (K.C. Moore, Elastomerics, 110 (6), 1978 pages 36 à 42).

Cependant la réactivité modeste de ces systèmes connus engendre des cuissons lentes à basse température.

Ainsi, dans l'état actuel de la technique, il n'existe pas de système complet de vulcanisation non précurseur de nitrosamines, cancérigènes et donc réglementées, capable, dans des préparations de caoutchouc, et notamment dans des compositions de caoutchouc pour gommes de liaison, de conférer à la fois :

- une cuisson rapide à basse température,
- un rendement de réticulation élevé après cuisson à basse température,
- une bonne stabilité au stockage à température modérée (20-40°C).

Le but de l'invention est de proposer une utilisation dans un procédé de vulcanisation qui permet d'obtenir en même temps la combinaison des avantages précités tout en utilisant des composés non toxiques.

Cette utilisation est conforme à la revendication 1.

Le procédé consiste à vulcaniser la composition précitée à une température comprise entre 95°C et 140°C, ce procédé étant utilisé par exemple pour lier deux pièces de caoutchouc, notamment lors de la fabrication, lors du rechapage ou lors de la réparation d'enveloppes de pneumatiques.

La composition peut comporter en outre des charges et additifs habituels, comme par exemple du noir de carbone, de la silice, de l'acide silicique, de l'oxyde de zinc, de l'acide stéarique, des sels de cobalt, des résines, des

agents de protection, notamment des anti-oxydants, des huiles d'extension, des agents tackifiants et divers agents de mise en oeuvre.

L'invention sera aisément comprise à l'aide des exemples non limitatifs qui suivent.

## I FORMULES ET ABREVIATIONS

La signification des abréviations utilisées dans la suite de la description est donnée ci-dessous, avec les formules chimiques correspondantes.

MBT : mercaptobenzothiazole

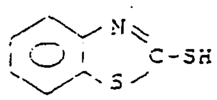

MBTS : disulfure de benzothiazyle

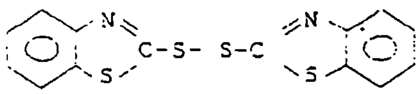

ZBEC : dibenzyldithiocarbamate de zinc

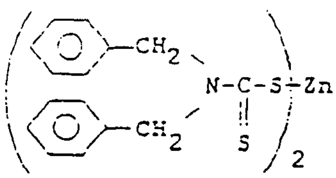

TBZTD : disulfure de tétrabenzylthiurame

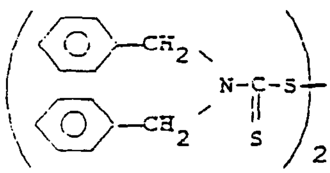

TMTD : disulfure de tétraméthylthiurame

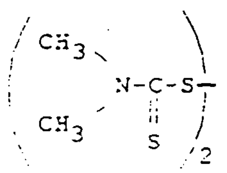

DPG : diphénylguanidine

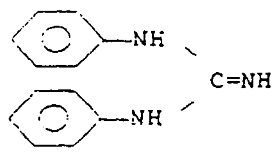

Condensat BA : condensat butyraldéhyde-aniline

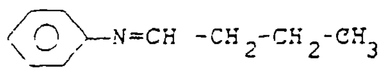

CHA : cyclohexylamine

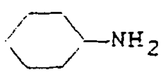

Aliquat 336®: chlorure de méthyl trioctylammonium (HENKEL Corp.)

$CH_3N[(CH_2)_7CH_3]_3\ Cl$

## II DEFINITIONS ET TESTS

Les définitions et les tests utilisés dans les exemples sont indiqués ci-dessous.

### 1. Rhéométrie

On utilise un rhéométre classique à rotor oscillant tel que décrit dans la norme AFNOR-NF-T43-015 (août 1975). Les mesures sont effectuées à 110°C.

L'évolution du couple rhéométrique en fonction du temps décrit l'évolution de la rigidification de la composition de caoutchouc, par suite de la réticulation de ce dernier par le soufre sous l'action de la chaleur. Le couple rhéométrique maximal permet de décrire le rendement de cette réaction de réticulation.

Les caractéristiques cinétiques de la cuisson des compositions sont appréciées conformément à la norme précitée, par les paramètres suivants :

- ts(0,2) : temps d'induction de la réaction
- t99 : temps de cuisson pour atteindre un degré d'avancement de la réticulation de 0,99, avec la relation suivante :

$$\frac{\text{(couple rhéométrique à t99)}}{\text{(couple rhéométrique maximal)}} = 0{,}99$$

- CRI : indice de vitesse de réticulation, avec la relation suivante :

$$CRI = 100 / [t99 - ts(0,2)]$$

**2. <u>Plasticité Mooney</u>**

La mesure de la plasticité Mooney est effectuée dans un consistomètre oscillant, selon le principe décrit dans la norme AFNOR-NF-T 43-005 (novembre 1980) et rappelé ci-après.

La composition crue est moulée dans une enceinte cylindrique chauffée à 100°C. Après une minute de préchauffage, le rotor tourne au sein de l'éprouvette à 2 tours/minute et on mesure le couple utile pour entretenir ce mouvement après 4 minutes de rotation.

La plasticité Mooney est ainsi notée ML(1+4). Elle est exprimée en "unités Mooney" (U.M) : 1 U.M = 0,083 newton.mètre (N.m).

La plasticité Mooney permet de suivre dans le temps l'évolution de la stabilité d'une composition crue de caoutchouc. Dans ce but, pour une composition donnée, on détermine la plasticité Mooney ML(1 +4) sur la composition initiale et sur la composition qui a subi un vieillissement par stockage à 40°C pendant 21 jours.

Cette évolution est alors donnée par le delta Mooney qui est défini par la relation :

$$\text{delta Mooney} = ML(1+4) \text{ après stockage} - ML(1+4) \text{ initial}$$

**III <u>EXEMPLES</u>**

Dans les exemples qui suivent, les compositions sont soit utilisées conformément à l'invention soit non conformémentà l'invention. Dans les compositions de ces exemples les chiffres qui correspondent à des constitutions sont des parties en poids, sauf indication différente.

**<u>Exemple 1</u>**

Le but de cet exemple est de montrer le bon compromis réactivité/stabilité des compositions

On prépare un mélange de base ayant la constitution suivante :

| | |
|---|---|
| caoutchouc naturel | 100 |
| noir de carbone | 47 |
| huile | 15 |
| oxyde de zinc | 5 |
| acide stéarique | 1 |
| anti-oxydant (*) | 2 |
| (*) N-1,3 diméthyl-N-phényl-paraphénylènediamine | |

A ce mélange de base on ajoute du soufre insoluble, des accélérateurs et des activateurs, conformément au tableau 1. Le soufre insoluble utilisé est du soufre CRYSTEX® OT20 de Kali-Chemie, Stauffer GmbH, qui contient 20 % en poids d'huile naphténique.

On obtient ainsi cinq compositions référencées 1.1 à 1.5.

Tableau 1

| Composition | 1.1 | 1.2 | 1.3 | 1.4 | 1.5 |
|---|---|---|---|---|---|
| MBTS | 1,1 | | | 0,32 | 1,1 |
| MBT | | 0,6 | 0,6 | | |
| ZDEC | | 0,5 | | | |
| TMTD | 0,22 | | | | |
| TBZTD | | | | | 0,5 |
| ZBEC | | | 1,35 | 1,44 | |
| DPG | 0,44 | 0,11 | | 0,33 | |
| Condensat BA | | | | | 0,3 |
| Soufre insoluble | 2,75 | 3 | 3 | 3 | 2,75 |

La composition 1.1 contient du TMTD, précurseur de diméthylnitrosamine, cancérigène et donc réglementée.
La composition 1.2 contient du ZDEC, précurseur de diéthylnitrosamine, cancérigène et donc réglementée.
La composition 1.3 ne contient pas d'activateur aminé de vulcanisation.
Les compositions 1.4 et 1.5 sont formulées avec des associations d'accélérateurs et d'un activateur aminé de vulcanisation (MBTS/ZBEC/DPG ou MBTS/TBZTD/Condensat BA).

Les caractéristiques rhéométriques des compositions 1.1 à 1.5 à 110°C sont données dans le tableau 2.

Tableau 2

| Composition | 1.1 | 1.2 | 1.3 | 1.4 | 1.5 |
|---|---|---|---|---|---|
| ts(0,2) (min) | 8,7 | 3,5 | 1,2 | 6,2 | 2,9 |
| t99 (min) | 35 | 31 | 78 | 28 | 24 |
| CRI ($min^{-1}$) | 3,8 | 3,64 | 1,3 | 4,59 | 4,74 |
| couple rhéométrique maximal (dN.m) | 16,2 | 13,9 | 12,7 | 14,7 | 14,9 |

Les compositions 1.1, 1.2, 1.4 et 1.5 permettent d'obtenir des cuissons à 110°C rapides avec un rendement de vulcanisation élevé.
La composition 1.3 cuit très lentement et atteint un rendement de vulcanisation beaucoup plus faible.
On constate que, par rapport aux systèmes 1.1 ou 1.2, l'utilisation des associations MBTS/ZBEC/DPG et MBTS/TBZTD/Condensat BA conduit à une diminution du temps de cuisson (t99) et à une augmentation de la vitesse (CRI).

Les compositions 1.4 et 1.5 permettent donc des cuissons plus rapides que les compositions connues (compositions 1.1, 1.2 et 1.3).

Comme indiqué précédemment dans le paragraphe 2 du chapitre II, la stabilité des compositions de caoutchouc à cru est appréciée par l'évolution de la plasticité Mooney (delta Mooney) après un vieillissement effectué par stockage à 40°C pendant une durée de 21 jours.
Les résultats sont regroupés dans le tableau 3.

Tableau 3

| Composition | 1.1 | 1.2 | 1.3 | 1.4 | 1.5 |
|---|---|---|---|---|---|
| ML(1+4) initial | 40,3 | 48,5 | 48 | 45 | 42,5 |
| ML(1+4) après stockage | 53,5 | 80 | 52,8 | 49,3 | 49 |
| delta Mooney | 13,2 | 32 | 4,8 | 4,3 | 6,5 |

L'évolution de la plasticité (delta Mooney) des compositions 1.1 et 1.2 est très importante, surtout dans le cas de la composition 1.2.

La stabilité à cru est très nettement améliorée avec les compositions 1.4 et 1.5.

La stabilité de la composition 1.3 est elle aussi très bonne. Néanmoins, comme précisé précédemment au sujet du tableau 2, le système de vulcanisation de cette composition n'est pas suffisamment réactif pour conférer à la composition une cinétique de cuisson rapide à 110°C.

**Exemple 2**

Cet exemple permet de montrer l'influence des taux relatifs des composés b) et c) de l'invention, le composé b) étant le MBTS et le composé c) étant le TBZTD ou le ZBEC.

Au mélange de base de l'exemple 1 on ajoute du soufre insoluble, des accélérateurs et des activateurs, conformément au tableau 4. Le soufre insoluble utilisé est celui décrit dans l'exemple 1.

On obtient ainsi six compositions référencées 2.1 à 2.6.

Tableau 4

| Composition | 2.1 | 2.2 | 2.3 | 2.4 | 2.5 | 2.6 |
|---|---|---|---|---|---|---|
| MBTS | | 0,32 | 1,1 | 0,6 | 1,1 | 0,32 |
| MBT | 0,6 | | | | | |
| ZDEC | 0,5 | | | | | |
| TBZTD | | | | | 0,5 | 1,28 |
| ZBEC | | 1,44 | 0,56 | 0,5 | | |
| DPG | 0,11 | 0,33 | 0,33 | 0,33 | | |
| Condensat BA | | | | | 0,3 | 0,3 |
| Soufre insoluble | 3 | 3 | 3 | 3 | 2,75 | 2,75 |

La composition 2.1 contient du ZDEC, précurseur de diéthylnitrosamine, cancérigène et donc réglementée. Les compositions 2.2 à 2.6 sont formulées avec des associations MBTS/ZBEC/DPG ou MBTS/TBZTD/Condensat BA, en modifiant pour chacune de ces associations les taux de MBTS et de ZBEC ou de TBZTD.

Les caractéristiques rhéométriques à 110°C de ces compositions sont données dans le tableau 5.

Tableau 5

| Composition | 2.1 | 2.2 | 2.3 | 2.4 | 2.5 | 2.6 |
|---|---|---|---|---|---|---|
| ts(0,2) (min) | 3,5 | 6,2 | 11,6 | 15 | 2,9 | 8,5 |
| t99 (min) | 31 | 28 | 39,2 | 44,8 | 24 | 25,5 |
| CRI ($min^{-1}$) | 3,64 | 4,59 | 3,62 | 3,35 | 4,74 | 5,88 |
| couple rhéométrique maximal (dN.m) | 13,9 | 14,7 | 16,6 | 15,1 | 14,5 | 14,2 |

Les compositions 2.1 à 2.6 permettent d'obtenir des cuissons rapides à 110°C avec un rendement élevé. Les associations MBTS/ZBEC/DPG ou MBTS/TBZTD/Condensat BA, quels que soient les taux d'accélérateurs employés, permettent d'avoir des vitesses de cuisson (CRI) analogues à celle de la composition connue (composition 2.1), voire plus rapides.

L'évolution de la plasticité Mooney à 100°C des compositions 2.1 à 2.6 est donnée dans le tableau 6.

Tableau 6

| Composition | 2.1 | 2.2 | 2.3 | 2.4 | 2.5 | 2.6 |
|---|---|---|---|---|---|---|
| ML(1+4) initial | 48 | 45 | 42 | 42 | 42,5 | 38 |
| ML(1+4) après stockage | 80 | 49,3 | 46 | 45,1 | 49 | 47 |
| delta Mooney | 32 | 4,3 | 4 | 3,1 | 6,5 | 9 |

L'évolution de la plasticité de la composition 2.1 est très importante.
La stabilité à cru des compositions 2.2 à 2.6 est nettement meilleure que celle de la composition 2.1.

**Exemple 3**

Cet exemple permet de montrer l'influence du choix du composé b) (MBT ou MBTS), lorsque le composé c) est fixé (ZBEC).

Au mélange de base de l'exemple 1 on ajoute du soufre insoluble, des accélérateurs et des activateurs, conformément au tableau 7. Le soufre insoluble utilisé est celui décrit dans l'exemple 1.

On obtient ainsi quatre compositions, référencées 3.1 à 3.4, qui sont formulées à partir d'une association employant un dérivé soufré du benzothiazole (MBT ou MBTS) comme composé b), du ZBEC comme composé c) et la DPG comme composé d).

Tableau 7

| Composition | 3.1 | 3.2 | 3.3 | 3.4 |
|---|---|---|---|---|
| MBT | 0,32 | | 0,6 | |
| MBTS | | 0,32 | | 0,6 |
| ZBEC | 1,44 | 1,44 | 0,5 | 0,5 |
| DPG | 0,22 | 0,33 | 0,15 | 0,33 |
| Soufre insoluble | 3 | 3 | 3 | 3 |

Les caractéristiques rhéométriques de ces quatre compositions mesurées à 110°C sont données dans le tableau 8.

Tableau 8

| Composition | 3.1 | 3.2 | 3.3 | 3.4 |
|---|---|---|---|---|
| ts(0,2) (min) | 4,5 | 6,2 | 5,8 | 15 |
| t99 (min) | 26 | 28 | 34 | 44,8 |
| CRI ($min^{-1}$) | 4,65 | 4,59 | 3,54 | 3,35 |
| couple rhéométrique maximal (dN.m) | 14,3 | 14,7 | 14,3 | 15,0 |

Les compositions 3.1 à 3.4 permettent d'obtenir des cinétiques de cuisson à 110°C rapides avec parallèlement un rendement de vulcanisation élevé.
Le tableau 9 donne l'évolution de la plasticité Mooney à 100°C.

Tableau 9

| Composition | 3.1 | 3.2 | 3.3 | 3.4 |
|---|---|---|---|---|
| ML(1+4) initial | 42 | 45 | 42 | 42 |
| ML(1+4) après stockage | 45,1 | 49,3 | 46 | 45,1 |
| delta Mooney | 3,1 | 4,3 | 4 | 3,1 |

Dans tous les cas, la stabilité à cru des compositions est excellente.

**Exemple 4**

Le but de cet exemple est de montrer l'influence du choix du composé d) activateur de vulcanisation aminé.
Au mélange de base de l'exemple 1 on ajoute du soufre insoluble, des accélérateurs et des activateurs, conformément au tableau 10. Le soufre insoluble employé est le même que pour l'exemple 1.
On obtient ainsi quatre compositions, référencées 4.1 à 4.4, qui sont formulées à partir d'une association MBTS/ZBEC avec un activateur aminé de nature chimique différente: amine, guanidine, condensat aldéhyde-amine, sel d'ammonium quaternaire.

Tableau 10

| Composition | 4.1 | 4.2 | 4.3 | 4.4 |
|---|---|---|---|---|
| MBTS | 0,32 | 0,32 | 0,32 | 0,32 |
| ZBEC | 1,44 | 1,44 | 1,44 | 1,44 |
| DPG | 0,33 | | | |
| Condensat BA | | 0,15 | | |
| Aliquat® 336 | | | | 0,15 |
| Cyclohexylamine | | | 0,3 | |

(suite)

| Composition | 4.1 | 4.2 | 4.3 | 4.4 |
|---|---|---|---|---|
| Soufre insoluble | 3 | 3 | 3 | 3 |

Les caractéristiques rhéométriques de ces compositions à 110°C sont données dans le tableau 11.

Tableau 11

| Composition | 4.1 | 4.2 | 4.3 | 4.4 |
|---|---|---|---|---|
| ts(0,2) (min) | 6,2 | 2,6 | 4,7 | 2,7 |
| t99 (min) | 28 | 24,6 | 32,7 | 18,6 |
| CRI ($min^{-1}$) | 4,59 | 4,54 | 3,57 | 6,29 |
| couple rhéométrique maximal (dN.m) | 14,7 | 14,1 | 14,9 | 13,8 |

Quelque soit l'activateur de vulcanisation aminé employé, les systèmes MBTS/ZBEC confèrent aux compositions des cinétiques de cuisson à 110°C rapides avec un rendement de vulcanisation élevé.
Le tableau 12 montre l'évolution de la plasticité Mooney à 100°C.

Tableau 12

| Composition | 4.1 | 4.2 | 4.3 | 4.4 |
|---|---|---|---|---|
| ML(1+4) initial | 45 | 43,5 | 38 | 36,5 |
| ML(1+4) après stockage | 49,3 | 48,5 | 44 | 40,2 |
| delta Mooney | 4,3 | 5 | 6 | 3,7 |

Indépendamment de la nature du composé d) choisi, les compositions 4.1 à 4.4 présentent une très bonne stabilité à cru.

__Exemple 5__

On étudie dans cet exemple des compositions ayant, par rapport aux exemples précédents, des quantités différentes de noir de carbone et d'huile.
On prépare un mélange de base ayant la constitution suivante :

| | |
|---|---|
| caoutchouc naturel | 100 |
| noir de carbone | 30 |
| huile | 23 |
| oxyde de zinc | 5 |
| acide stéarique | 1 |
| anti-oxydant (*) | 2 |
| (*) N-1,3 diméthyl-N-phényl-paraphénylènediamine | |

A ce mélange de base on ajoute du soufre insoluble, des accélérateurs et des activateurs, conformément au tableau 13. Le soufre insoluble employé est le même que pour l'exemple 1. On obtient ainsi quatre compositions référencées 5.1 à 5.4.

Tableau 13

| Composition | 5.1 | 5.2 | 5.3 | 5.4 |
|---|---|---|---|---|
| MBT | 0,6 | 0,6 | 0,6 | |
| MBTS | | | | 0,32 |
| ZDEC | 0,5 | | | |

(suite)

| Composition | 5.1 | 5.2 | 5.3 | 5.4 |
|---|---|---|---|---|
| ZBEC | | 1,35 | 0,5 | 1,44 |
| DPG | 0,22 | | 0,22 | 0,33 |
| Soufre insoluble | 3,5 | 3,5 | 3,5 | 3,5 |

La composition 5.1 contient du ZDEC, précurseur de diéthylnitrosamine, cancérigène et donc réglementée.

La composition 5.2 ne contient pas d'activateur de vulcanisation aminé d).
Les compositions 5.3 et 5.4 sont formulées avec des associations d'accélérateurs et d'un activateur de vulcanisation (MBT/BEC/DPG ou MBTS/ZBEC/DPG).

Le tableau 14 donne les caractéristiques rhéométriques à 110°C de ces compositions.

Tableau 14

| Composition | 5.1 | 5.2 | 5.3 | 5.4 |
|---|---|---|---|---|
| ts(0,2) (min) | 2,3 | 2,5 | 0,7 | 4,8 |
| t99 (min) | 24,6 | 46 | 27,5 | 21 |
| CRI ($min^{-1}$) | 4,48 | 2,3 | 3,73 | 6,17 |
| couple rhéométrique maximal (dN.m) | 9,3 | 8,6 | 8,5 | 8,5 |

La composition 5.2 cuit très lentement.
Les compositions 5.1, 5.3 et 5.4 permettent d'obtenir des cuissons à 110°C rapides et un rendement de vulcanisation élevé.

Le tableau 15 donne l'évolution de la plasticité Mooney à 100°C.

Tableau 15

| Composition | 5.1 | 5.2 | 5.3 | 5.4 |
|---|---|---|---|---|
| ML(1+4) initial | 27 | 24,3 | 25,2 | 25 |
| ML(1+4) après stockage | 64 | 25,5 | 28 | 27 |
| delta Mooney | 37 | 1,2 | 2,8 | 2 |

L'évolution de la plasticité de la composition 5.1 est très importante. La stabilité à cru est en revanche très nettement améliorée avec les compositions 5.3 et 5.4 conformes à l'invention.
La stabilité de la composition 5.2 non conforme à l'invention est, elle aussi, très bonne. Cependant, comme précédemment indiqué au sujet du tableau 14, son système de vulcanisation n'est pas suffisamment réactif pour conférer à la composition une cinétique de cuisson rapide à 110°C.

**Exempte 6**

Le but de cet exemple est de montrer que l'invention s'applique à des compositions qui comportent un autre élastomère que le caoutchouc naturel.

On prépare un mélange de base ayant la constitution suivante :

| | |
|---|---|
| SBR (*) | 100 |
| noir de carbone | 47 |
| huile | 15 |
| oxyde de zinc | 5 |
| acide stéarique | 1 |

(suite)

| | |
|---|---|
| anti-oxydant (**) | 2 |
| (*) SBR ; copolymère styrène/butadiène comprenant 25 % de motifs styrène<br>(**) N-1,3 diméthyl-N-phényl-paraphénylènediamine | |

A ce mélange de base on ajoute du soufre insoluble, des accélérateurs et des activateurs, conformément au tableau 16. Le soufre insoluble utilisé est le même que dans l'exemple 1. On obtient ainsi trois compositions référencées 6.1 1 à 6.3.

Tableau 16

| Composition | 6.1 | 6.2 | 6.3 |
|---|---|---|---|
| MBT | 0,6 | | |
| MBTS | | 1,1 | 0,32 |
| ZDEC | | | |
| TBZTD | | 0,5 | |
| ZBEC | 1,35 | | 1,44 |
| DPG | | | 0,33 |
| Condensat BA | | 0,3 | |
| Soufre insoluble | 3 | 2,75 | 3 |

La composition 6.1 ne contient pas d'activateur de vulcanisation aminé. Les compositions 6.2 et 6.3 sont formulées avec des associations MBTS/TBZTD/condensat BA ou MBTS/ZBEC/DPG,

Le tableau 17 donne les caractéristiques rhéométriques à 110°C de ces compositions.

Tableau 17

| Composition | 6.1 | 6.2 | 6.3 |
|---|---|---|---|
| ts(0,2) (min) | 19,9 | 2,5 | 6,5 |
| t99 (min) | 82 | 30,3 | 30 |
| CRI ($min^{-1}$) | 1,61 | 3,6 | 4,2 |
| couple rhéométrique maximal (dN.m) | 9,4 | 14,9 | 13,3 |

La composition 6.1 cuit très lentement, et atteint un rendement de vulcanisation faible.
Les compositions 6.2 et 6.3 donnent des cinétiques de cuisson à 110°C rapides avec un rendement de vulcanisation élevé.

Le tableau 18 donne l'évolution de la plasticité Mooney à 100°C.

Tableau 18

| Composition | 6.1 | 6.2 | 6.3 |
|---|---|---|---|
| ML(1+4) initial | 58,5 | 60 | 57,3 |
| ML(1+4) après stockage | 60,9 | 64 | 60 |
| delta Mooney | 2,4 | 4 | 2,7 |

La stabilité à cru des trois compositions est excellente.

__Exemple 7__

Le but de cet exemple est de montrer l'application de l'invention au rechapage d'une enveloppe de pneumatique. On formule la composition suivante :

| | |
|---|---|
| caoutchouc naturel | 100 |
| noir de carbone | 47 |
| huile | 15 |
| oxyde de zinc | 5 |
| acide stéarique | 1 |
| résine tackifiante (*) | 3 |
| anti-oxydant (**) | 2 |
| soufre insoluble (***) | 3 |
| MBT | 0,6 |
| ZBEC | 0,5 |
| DPG | 0,15 |

(*) Korésine (résine alkyl-phénol-acétylène)
(**) N-1,3 diméthyl-N-phényl-paraphénylènediamine
(***) le soufre insoluble utilisé est celui décrit dans l'exemple 1

Cette composition est utilisée comme gomme de liaison dans le procédé de rechapage par vulcanisation froide, ce procédé étant également appelé rechapage par bande prémoulée.

Dans ce procédé, une enveloppe de pneumatique pour poids lourd de dimension 315/80 R 22,5, en fin de première vie, est déchapée. La carcasse est nettoyée et brossée. Une bande de 1 mm d'épaisseur de gomme de liaison crue, réalisée avec la composition précédente, est alors appliquée sur la carcasse. On pose enfin la bande de roulement de remplacement, précuite et prémoulée, sur la carcasse ainsi préparée.
L'enveloppe rechapée est introduite dans une étuve à 110°C, pressurisée à 5 bars, pendant 2 heures.
A l'issue de cette cuisson, la bande de roulement adhère aussi parfaitement à la carcasse que dans le cas d'une enveloppe neuve.

Les exemples précédents montrent que l'invention permet d'obtenir, en même temps, les avantages suivants :

- on utilise des composés non cancérigènes ou non précurseurs de produits cancérigènes; ils ne sont donc pas réglementés ;
- on obtient une cuisson rapide à basse température, inférieure à 140°C, avec un rendement de vulcanisation excellent ;
- la stabilité à cru des compositions lors du stockage est excellente ;
- cette bonne stabilité à cru permet de stocker ensemble les composants du système de vulcanisation, elle permet en outre d'avoir des conditions de transport et de stockage moins contraignantes que pour les compositions connues ;
- grâce à la bonne stabilité à cru, les compositions gardent une vitesse de cuisson importante, même après des temps prolongés de stockage ;

De préférence la composition présente au moins une des caractéristiques suivantes :

- elle contient du caoutchouc naturel ou un mélange de caoutchouc naturel et d'au moins un autre caoutchouc choisi dans le groupe constitué par le polyisoprène, le polybutadiène, les copolymères styrène-butadiène, styrène-isoprène, butadiène-isoprène et les terpolymères styrène-butadiène-isoprène ;
- elle contient au moins un additif choisi dans le groupe constitué par les noirs de carbone, les huiles d'extension, les agents tackifiants ;
- pour 100 parties en poids du caoutchouc ou de l'ensemble des caoutchoucs, le taux de soufre est compris entre 0,5 et 5 parties en poids, et avantageusement entre 1 et 3 parties en poids, le taux du composé b), ou de l'ensemble

des composés b), est compris entre 0,1 et 3 parties en poids, et avantageusement entre 0,2 et 2 parties en poids, le taux du composé c), ou de l'ensemble des composés c), est compris entre 0,2 et 3 parties en poids, et avantageusement entre 0,4 et 2 parties en poids, le taux du composé d), ou de l'ensemble des composés d), est compris entre 0,05 et 1 partie en poids, et avantageusement entre 0,1 et 0,5 partie en poids.

De préférence, le procédé consiste à vulcaniser la composition à une température comprise entre 95°C et 115°C.

Dans l'exemple 7 précédent, le procédé a été mis en oeuvre pour rechaper une enveloppe de pneumatique usagée, mais le procédé peut aussi être mis en oeuvre pour fabriquer des enveloppes de pneumatiques neuves, par exemple pour coller une bande de roulement précuite sur une carcasse précuite, ou pour réparer des enveloppes de pneumatiques, par exemple pour boucher des trous, notamment dans les flancs ou dans la bande de roulement ou dans d'autres parties de ces enveloppes. D'autre part, l'invention peut être mise en oeuvre à la fois pour réparer et pour rechaper une même enveloppe de pneumatique usagée.

Dans ces modes de réalisation, la composition vulcanise au contact de caoutchoucs qui peuvent être soit totalement prévulcanisés, soit partiellement prévulcanisés, la vulcanisation totale de ces caoutchoucs se produisant alors soit lors de la vulcanisation de la composition, soit ultérieurement.

La nature des caoutchoucs au contact desquels vulcanise la composition dans les applications précitées peut être quelconque, ces caoutchoucs, qui vulcanisent au soufre ou avec d'autres systèmes de vulcanisation, pouvant être par exemple, mais non nécessairement, un ou plusieurs caoutchoucs choisis dans le groupe formé par le caoutchouc naturel, le polyisoprène, le polybutadiène, les copolymères styrène-butadiène, styrène-isoprène, butadiène-isoprène, et les terpolymères styrène-butadiène-isoprène.

Bien entendu, l'invention n'est pas limitée aux exemples de réalisation précités.

## Revendications

1. Utilisation dans un procédé de vulcanisation à une température comprise entre 95°C et 140°C d'une composition dépourvue de précurseur d'au moins une nitrosamine classée cancérigène selon la règle technique d'Allemagne TRGS 552, et comportant au moins un caoutchouc choisi dans le groupe constitué par le caoutchouc naturel, le polyisoprène, le polybutadiène, les copolymères styrène-butadiène, styrène-isoprène, butadiène-isoprène et les terpolymères styrène-butadiène-isoprène, comportant comme système de vulcanisation :

    a) entre 0,5 et 5 parties en poids de soufre ;
    b) entre 0,1 et 3 parties en poids d'au moins un composé accélérateur choisi dans le groupe constitué par le disulfure de benzothiazyle et le mercaptobenzothiazole ;
    c) entre 0,2 et 3 parties en poids d'au moins un composé ultra-accélérateur choisi dans le groupe formé par le disulfure de tétrabenzylthiurame et le dibenzyldithiocarbamate de zinc ;
    d) entre 0,05 et 1 partie en poids d'au moins un activateur aminé de vulcanisation choisi dans le groupe formé par les amines, les guanidines, les condensats d'aldéhydes et d'amines, les sels d'ammonium quaternaire, les quantités étant calculées pour 100 parties en poids du caoutchouc ou de l'ensemble des caoutchoucs,

    comme gomme de liaison de deux pièces en caoutchouc crues ou prévulcanisées pour les enveloppes de pneumatique.

2. Utilisation selon la revendication 1, **caractérisée en ce que** les deux pièces en caoutchouc constituent une partie d'une enveloppe de pneumatique neuve ou rechapée.

3. Utilisation dans un procédé de vulcanisation à une température comprise entre 95°C et 140°C d'une composition dépourvue de précurseur d'au moins une nitrosamine classée cancérigène selon la règle technique d'Allemagne TRGS 552, et comportant au moins un caoutchouc choisi dans le groupe constitué par le caoutchouc naturel, le polyisoprène, le polybutadiène, les copolymères styrène-butadiène, styrène-isoprène, butadiène-isoprène et les terpolymères styrène-butadiène-isoprène, comportant comme système de vulcanisation :

    a) entre 0,5 et 5 parties en poids de soufre ;
    b) entre 0,1 et 3 parties en poids d'au moins un composé accélérateur choisi dans le groupe constitué par le disulfure de benzothiazyle et le mercaptobenzothiazole ;
    c) entre 0,2 et 3 parties en poids d'au moins un composé ultra-accélérateur choisi dans le groupe formé par le disulfure de tétrabenzylthiurame et le dibenzyldithiocarbamate de zinc ;
    d) entre 0,05 et 1 partie en poids d'au moins un activateur aminé de vulcanisation choisi dans le groupe formé

par les amines, les guanidines, les condensats d'aldéhydes et d'amines, les sels d'ammonium quaternaire, les quantités étant calculées pour 100 parties en poids du caoutchouc ou de l'ensemble des caoutchoucs,

comme gomme de réparation d'une pièce en caoutchouc pour les enveloppes de pneumatique.

**4.** Utilisation selon la revendication 3, **caractérisée en ce que** la pièce en caoutchouc constitue une partie d'une enveloppe de pneumatique usagée.

**5.** Utilisation selon l'une quelconque des revendications 1 à 4, **caractérisée en ce que** la composition contient du caoutchouc naturel ou un mélange de caoutchouc naturel et d'au moins un autre caoutchouc choisi dans le groupe constitué par le polyisoprène, le polybutadiène, les copolymères styrène-butadiène, styrène-isoprène, butadiène-isoprène et les terpolymères styrène-butadiène-isoprène.

**6.** Utilisation selon l'une quelconque des revendications 1 à 5, **caractérisée en ce que** la composition contient au moins un additif choisi dans le groupe constitué par les noirs de carbone, les huiles d'extension, les agents tackifiants.

**7.** Utilisation selon l'une quelconque des revendications 1 à 6, **caractérisée en ce que**, pour 100 parties en poids du caoutchouc ou de l'ensemble des caoutchoucs, le taux de soufre est compris entre 1 et 3 parties en poids.

**8.** Utilisation selon l'une quelconque des revendications 1 à 7, **caractérisée en ce que**, pour 100 parties en poids du caoutchouc ou de l'ensemble des caoutchoucs, le taux du composé b), ou de l'ensemble des composés b), est compris entre 0,2 et 2 parties en poids.

**9.** Utilisation selon l'une quelconque des revendications 1 à 8, **caractérisée en ce que**, pour 100 parties en poids du caoutchouc ou de l'ensemble des caoutchoucs, le taux du composé c), ou de l'ensemble des composés c), est compris entre 0,4 et 2 parties en poids.

**10.** Utilisation selon l'une quelconque des revendications 1 à 9, **caractérisée en ce que**, pour 100 parties en poids du caoutchouc ou de l'ensemble des caoutchoucs, le taux du composé d), ou de l'ensemble des composés d), est compris entre 0,1 et 0,5 parties en poids.

**11.** Utilisation selon l'une quelconque des revendications 1 à 10, **caractérisée en ce que** la composition comporte de la diphénylguanidine comme composé d).

**12.** Utilisation selon l'une quelconque des revendications 1 à 11, **caractérisée en ce que** la vulcanisation froide a lieu à une température comprise entre 95°C et 115°C.

## Claims

**1.** The use in a vulcanisation process at a temperature of between 95°C and 140°C of a composition which is free of precursor of at least one nitrosamine classed as carcinogenic by German technical regulation TRGS 552, and comprising at least one rubber selected from the group consisting of natural rubber, polyisoprene, polybutadiene, styrene-butadiene, styrene-isoprene and butadiene-isoprene copolymers, and styrene-butadiene-isoprene terpolymers, comprising, as vulcanisation system:

a) between 0.5 and 5 parts by weight of sulphur;
b) between 0.1 and 3 parts by weight of at least one accelerator compound selected from the group consisting of benzothiazyl disulphide and mercaptobenzothiazole;
c) between 0.2 and 3 parts by weight of at least one ultra-accelerator compound selected from the group consisting of tetrabenzylthiuram disulphide and zinc dibenzyldithiocarbamate;
d) between 0.05 and 1 parts by weight of at least one amine vulcanisation activator selected from the group consisting of amines, guanidines, aldehyde and amine condensates and quaternary ammonium salts, the quantities being calculated per 100 parts by weight of the rubber or all the rubbers,

as a connecting rubber for connecting two raw or prevulcanised pieces of rubber for tyre casings.

**2.** The use according to Claim 1, **characterised in that** the two pieces of rubber form part of a new or recapped tyre.

**3.** The use in a vulcanisation process at a temperature of between 95°C and 140°C of a composition which is free of precursor of at least one nitrosamine classed as carcinogenic by German technical regulation TRGS 552, and comprising at least one rubber selected from the group consisting of natural rubber, polyisoprene, polybutadiene, styrene-butadiene, styrene-isoprene and butadiene-isoprene copolymers, and styrene-butadiene-isoprene terpolymers, comprising, as vulcanisation system:

a) between 0.5 and 5 parts by weight of sulphur;
b) between 0.1 and 3 parts by weight of at least one accelerator compound selected from the group consisting of benzothiazyl disulphide and mercaptobenzothiazole;
c) between 0.2 and 3 parts by weight of at least one ultra-accelerator compound selected from the group consisting of tetrabenzylthiuram disulphide and zinc dibenzyldithiocarbamate;
d) between 0.05 and 1 parts by weight of at least one amine vulcanisation activator selected from the group consisting of amines, guanidines, aldehyde and amine condensates and quaternary ammonium salts, the quantities being calculated per 100 parts by weight of the rubber or all the rubbers,

as a repair rubber for a piece of rubber for tyre casings.

**4.** The use according to Claim 3, **characterised in that** the piece of rubber forms part of a worn tyre.

**5.** The use according to any one of Claims 1 to 4, **characterised in that** the composition contains natural rubber or a mixture of natural rubber and at least one other rubber selected from the group consisting of polyisoprene, polybutadiene, styrene-butadiene, styrene-isoprene and butadiene-isoprene copolymers, and styrene-butadiene-isoprene terpolymers.

**6.** The use according to any one of Claims 1 to 5, **characterised in that** the composition contains at least one additive selected from the group consisting of carbon blacks, extender oils and tackiness agents.

**7.** The use according to any one of Claims 1 to 6, **characterised in that**, for 100 parts by weight of the rubber or of all the rubbers, the amount of sulphur is between 1 and 3 parts by weight.

**8.** The use according to any one of Claims 1 to 7, **characterised in that**, for 100 parts by weight of the rubber or of all the rubbers, the amount of compound b) or of all the compounds b) is between 0.2 and 2 parts by weight.

**9.** The use according to any one of Claims 1 to 8, **characterised in that**, for 100 parts by weight of the rubber or of all the rubbers, the amount of compound c) or of all the compounds c) is between 0.4 and 2 parts by weight.

**10.** The use according to any one of Claims 1 to 9, **characterised in that**, for 100 parts by weight of the rubber or all the rubbers, the amount of compound d) or of all the compounds d) is between 0.1 and 0.5 parts by weight.

**11.** The use according to any one of Claims 1 to 10, **characterised in that** the composition comprises diphenylguanidine as compound d).

**12.** The use according to any one of Claims 1 to 11, **characterised in that** the cold vulcanisation takes place at a temperature of between 95°C and 115°C.

**Patentansprüche**

**1.** Verwendung einer Zusammensetzung, die frei ist von Vorläufern eines oder mehrerer im Sinne der deutschen Technischen Regel TRGS 552 als carcinogen eingestufter Nitrosamine, die mindestens einen Kautschuk enthält, der unter Naturkautschuk, Polyisopren, Polybutadien, Styrol-Butadien-Copolymeren, Styrol-Isopren-Copolymeren, Butadien-Isopren-Copolymeren und Styrol-Butadien-Isopren-Terpolymeren ausgewählt ist, und die als Vulkanisationssystem enthält:

a) 0,5 bis 5 Gewichtsteile Schwefel;
b) 0,1 bis 3 Gewichtsteile mindestens einer Beschleunigerverbindung, die unter Benzothiazyldisulfid und Mercaptobenzothiazol ausgewählt ist;
c) 0,2 bis 3 Gewichtsteile mindestens einer Ultrabeschleunigerverbindung, die unter Tetrabenzylthiuramdisulfid

und Zink-Dibenzyldithiocarbamat ausgewählt ist;
d) 0,05 bis 1 Gewichtsteil mindestens eines Amin-Vulkanisationsaktivators, der unter Aminen, Guanidinen, Aldehyd-Amin-Kondensationsprodukten und quaternären Ammoniumsalzen ausgewählt ist,

wobei die Mengen für 100 Gewichtsteile Kautschuk oder Kautschukmischung berechnet sind,
in einem Verfahren der Vulkanisation bei einer Temperatur von 95 bis 140 °C als Verbindungsgummi zur Verbindung von zwei Teilen aus nichtvulkanisiertem oder vulkanisiertem Kautschuk für Luftreifen.

**2.** Verwendung nach Anspruch 1, **dadurch gekennzeichnet, dass** die beiden Teile aus Kautschuk einen Teil eines neuen oder runderneuerten Luftreifens darstellen.

**3.** Verwendung einer Zusammensetzung, die frei ist von Vorläufern eines oder mehrerer im Sinne der deutschen Technischen Regel TRGS 552 als carcinogen eingestufter Nitrosamine, die mindestens einen Kautschuk enthält, der unter Naturkautschuk, Polyisopren, Polybutadien, Styrol-Butadien-Copolymeren, Styrol-Isopren-Copolymeren, Butadien-Isopren-Copolymeren und Styrol-Butadien-Isopren-Terpolymeren ausgewählt ist, und die als Vulkanisationssystem enthält:

a) 0,5 bis 5 Gewichtsteile Schwefel;
b) 0,1 bis 3 Gewichtsteile mindestens einer Beschleunigerverbindung, die unter Benzothiazyldisulfid und Mercaptobenzothiazol ausgewählt ist;
c) 0,2 bis 3 Gewichtsteile mindestens einer Ultrabeschleunigerverbindung, die unter Tetrabenzylthiuramdisulfid und Zink-Dibenzyldithiocarbamat ausgewählt ist;
d) 0,05 bis 1 Gewichtsteil mindestens eines Amin-Vulkanisationsaktivators, der unter Aminen, Guanidinen, Aldehyd-Amin-Kondensationsprodukten und quaternären Ammoniumsalzen ausgewählt ist,

wobei die Mengen für 100 Gewichtsteile Kautschuk oder Kautschukmischung berechnet sind,
in einem Verfahren der Vulkanisation bei einer Temperatur von 95 bis 140 °C als Reparaturgummi für ein Teil aus Kautschuk für Luftreifen.

**4.** Verwendung nach Anspruch 3, **dadurch gekennzeichnet, dass** das Teil aus Kautschuk einen Teil eines gebrauchten Luftreifens darstellt.

**5.** Verwendung nach einem der Ansprüche 1 bis 4, **dadurch gekennzeichnet, dass** die Zusammensetzung Naturkautschuk oder eine Mischung von Naturkautschuk mit mindestens einem anderen Kautschuk enthält, der unter Polyisopren, Polybutadien, Styrol-Butadien-Copolymeren, Styrol-Isopren-Copolymeren, Butadien-Isopren-Copolymeren und Styrol-Butadien-Isopren-Terpolymeren ausgewählt ist.

**6.** Verwendung nach einem der Ansprüche 1 bis 5, **dadurch gekennzeichnet, dass** die Zusammensetzung mindestens ein Additiv enthält, das unter Rußen, Streckölen und Tackifiern ausgewählt ist.

**7.** Verwendung nach einem der Ansprüche 1 bis 6, **dadurch gekennzeichnet, dass** der Gehalt an Schwefel, bezogen auf 100 Gewichtsteile Kautschuk oder Kautschukmischung, 1 bis 3 Gewichtsteile beträgt.

**8.** Verwendung nach einem der Ansprüche 1 bis 7, **dadurch gekennzeichnet, dass** der Gehalt an Verbindung b) oder der Gesamtheit der Verbindungen b), bezogen auf 100 Gewichtsteile Kautschuk oder Kautschukmischung, 0,2 bis 2 Gewichtsteile beträgt.

**9.** Verwendung nach einem der Ansprüche 1 bis 8, **dadurch gekennzeichnet, dass** der Gehalt an Verbindung c) oder der Gesamtheit der Verbindungen c), bezogen auf 100 Gewichtsteile Kautschuk oder Kautschukmischung, 0,4 bis 2 Gewichtsteile beträgt.

**10.** Verwendung nach einem der Ansprüche 1 bis 9, **dadurch gekennzeichnet, dass** der Gehalt an Verbindung d) oder der Gesamtheit der Verbindungen d), bezogen auf 100 Gewichtsteile Kautschuk oder Kautschukmischung, 0,1 bis 0,5 Gewichtsteile beträgt.

**11.** Verwendung nach einem der Ansprüche 1 bis 10, **dadurch gekennzeichnet, dass** die Zusammensetzung als Verbindung d) Diphenylguanidin enthält.

**12.** Verwendung nach einem der Ansprüche 1 bis 11, **dadurch gekennzeichnet, dass** die Kaltvulkanisation bei einer Temperatur von 95 bis 115 °C durchgeführt wird.